# EUROPEAN PATENT APPLICATION

(11) **EP 4 786 913 A1**
(43) Date of publication of application: **05.08.2026**
(21) Application number: 24870203.7
(22) Date of filing: 16.08.2024
(51) Int. Cl.: F41G 1/34, F41G 1/46

(54) **PISTOL FUSION SIGHT**

(30) Priority: 28.09.2023 CN 202322657649 U
(71) Applicant: Huanic Corporation, Xi'an, Shaanxi 710077 (CN)
(72) Inventor: SUN, Jianhua, Shaanxi 710077 (CN); ZHAO, Yaofeng, Shaanxi 710077 (CN); WANG, Dong, Shaanxi 710077 (CN); LU, Sihang, Shaanxi 710077 (CN)
(74) Representative: Inspicos P/S
(86) International application number: PCT/CN2024/112702
(87) International publication number: WO 2025/066655

(57) **Abstract**

The present invention relates to a pistol fusion sight, comprising a split fusion sight. A reflective sighting member of the split fusion sight is clipped at a rear end of a top portion of a pistol sliding sleeve, a camera assembly of the split fusion sight is arranged at a bottom portion of a front end of a pistol grip, and the camera assembly and an illumination module are stacked one above the other in a connecting shell. The connecting shell is engaged, by means of a first engagement rail, with an axial track arranged on a bottom surface of the front end of the pistol grip. The reflective sighting member is fixed to the sliding sleeve by means of a second engagement rail arranged at a bottom portion of the reflective sighting member. A first wireless communication module connected to an image sensor digital camera core is arranged in the camera assembly, and a second wireless communication module connected to a display screen is arranged in the reflective sighting member. An existing camera assembly and reflective sighting member are separately prepared, and engaged at the front end and the rear end of a pistol barrel, respectively, and, by means of wireless communication, an existing fusion sighting tool is conveniently made suitable for a pistol. Moreover, maintenance and replacement of the fusion sight are flexible and simple.

## Description

### TECHNICAL FIELD

The present disclosure relates to a pistol fusion sight.

### BACKGROUND

In order to reduce the exposure risk for shooters, to make target determination dependent not only on manual visual observation, and to enhance target identifiability and expand the application environments of red dot sights, thermal imaging technology has been introduced to traditional red dot sighting devices. Generally, images captured by the thermal imaging technology are transmitted to a traditional red dot sighting device and then reflecting by lenses of the same to the user to assist in sighting, while the inherent sighting function of the red dot sighting device is also preserved, so that a fusion of the thermal imaging image and the red dot inherent red dot sighting is achieved. At the same time, by virtue of the electronic focusing function of thermal imaging technology, the accuracy of sighting is greatly improved, and particularly, unfavorable influences of the surrounding ambient light and shooting distance are effectively avoided, for example, a sight with thermal imaging function as disclosed in the invention patent No. 202210970881.4.

In addition, in order to facilitate the use and reduce costs in usage, a split-type fusion sight has also been provided, reference may be made to the Chinese utility model patent No. 202223132354.0, in which a fusion sight with the thermal imaging function is separately formed to consist of two parts, a sighting component and an eyepiece component, and the circuit connection and the signal transmission of the two parts, and their electrical connection and signal transmission are achieved by means of a PCB ribbon cable wiring technology, or the two parts are individually powered, and their signal transmission is performed through a wireless communication module, so that the use and the maintenance of the inner red point sighting device with the thermal imaging function are more convenient.

However, it is not difficult to find that these sight devices as mentioned above, whether integrated or split-type, and in particular, the split-type mentioned herein, will still be combined into an integrated unit in use, other than being separately mountable on firearms in use. Therefore, the current thermal imaging inner red dot sighting device is not suitable for compact pistol.

### SUMMARY

The present disclosure aims to provide a fusion sight which is suitable for small firearms.

In order to achieve the above purpose, the present disclosure provides a pistol fusion sight including a split-type fusion sight, a reflection type sighting member of the split-type fusion sight is clamped at a rear end of the top of a pistol slide, a camera component of the split-type fusion sight is disposed at a bottom of a front end of a pistol grip, what distinguishes it is that it further includes a illumination module;
the camera component and the illumination module are disposed inside the connecting housing in an upper-lower stacked configuration;
a first engagement rail is disposed on a top surface of the connecting housing;
the first engagement rail is used for being engaged on an axial rail disposed on a bottom surface of the front end of the grip;
a second engagement rail is disposed at the bottom of the reflective sighting member, to fix the reflective sighting member on the top surface of the rear end of the slide;
a first wireless communication module connected with an image sensor digital core is disposed inside the camera component;
a second wireless communication module connected with a display screen is disposed inside each reflective sighting members and is configured to transmit image data from the image sensor digital core to the display screen.

As a further improvement, a transverse projection is disposed inside a rail groove of the first engagement rail; the transverse projection is configured to be received in a transverse groove disposed on the axial rail.

As a further improvement, a first adjustment screw and a second adjustment screw are respectively disposed at both sides of the top of the front end of the connecting housing; an adjustment spring is disposed between a bottom of a chamber of the connecting housing, in which the camera component is mounted, and a bottom of a thermal imaging or low-light night vision lens component of the camera component, the adjustment spring is configured, in conjunction with the first adjustment screw and the second adjustment screw, to achieve an adjustment of camera optical axis of the thermal imaging or low-light night vision lens component, such that a projected object image of the display screen is fused with an actual object image.

As a further improvement, a screen maximum display area frame, a screen display area adjustment frame and a screen actual display area frame;
the screen display area adjustment frame and the screen actual display area frame are located inside a rectangular frame _{ABCD} of the screen maximum display area frame;
the screen display area adjustment frame is a rectangular frame _{abcd} which is offset to the outer side of the screen maximum display area frame;
the screen actual display area frame is a rectangle _{eggh} which is coincident in the middle point of diagonal line with the screen maximum display area frame.

One side of the connecting housing is provided with a power switch, and the other side is provided with a control push-button and a charging interface.

The image sensor digital core is a fusion core, which is any one or more of a thermal imaging core, a night vision core and a visible light core.

The aforementioned pistol fusion sight also includes AR glasses, where a third wireless communication module connected with AR display lenses is disposed inside a mounting frame of the AR glasses and is configured to transmit image data from the image sensor digital core to the AR display lenses so as to display inside a display area frame of the AR display lenses; a sighting point is disposed in the display area frame.

The present disclosure is advantageous that the existing target collecting member, i.e. eyepiece component (also known as sighting component or camera component) composed of a lens component and a core component of the sight (fusion sighting device for short) with thermal imaging and low-light night vision sighting function and incorporating traditional LED graphic chip, spectral display component (mainly composed of display screen and spectroscope, also known as reflective sighting member) are prepared separately, and transmission of image data is achieved by an additional WIFI communication module, while engagement rails are disposed on the outer sides of their housings respectively, these engagement rails are respectively connected with rails disposed on the pistol, so that the existing fusion sighting device may be conveniently applied to the pistol, which is not only convenient to use, but also flexible and easy to maintain and replace the same.

### BRIEF DESCRIPTION OF THE DRAWINGS

FIG. 1 is a first structural schematic view of a pistol fusion sight.
FIG. 2 is a schematic view of an integrated structure of a sighting component and a illumination module.
FIG. 3 is a cross-sectional view of FIG. 2.
FIG. 4 is a second structural schematic view of the pistol fusion sight.
FIG. 5 is a schematic view of a camera component adjustment mechanism.
FIG. 6 is a schematic structural view of a reflective sighting member.
FIG. 7 is setting schematic view of a screen display area frame.
FIG. 8 is a setting schematic view of an AR glasses sighting point.

### LIST OF REFERENCE NUMERALS:

1, Illumination module; 2, Camera component; 3, Connecting housing; 4, First engagement rail; 5, Transverse projection; 6, Barrel; 7, Axial rail; 8, Reflective sighting member; 9, Power switch; 10, Control push-button; 11, Charging interface; 12, Image sensor digital core; 13, Thermal imaging or low-light night vision lens component; 14, Battery compartment; 15, Light source component; 16, Second engagement rail; 17, First adjustment screw; 18, Second adjustment screw; 19, Adjustment spring; 20, Display screen; 21, Reflective lens; 22, Screen maximum display area frame; 23, Screen display area adjustment frame; 24, Screen actual display area frame; 25, Mounting frame; 26, AR display lenses; 27, Display area frame; 28, Sighting point; 29, Push-button; 30, Grip.

### DETAILED DESCRIPTION

In order to further elaborate the technical means adopted by the present disclosure to achieve the intended purpose and the effects thereof, hereinafter a detailed description of the specific implementation, structural features and effects thereof of the present disclosure are provided in conjunction with the accompanying drawings and the embodiments.

Hereinafter, a clear and complete description of the technical solutions of embodiments of the present disclosure will be provided in conjunction with the accompanying drawings of the embodiments of the present disclosure. Obviously, the described embodiments are only some of the embodiments of the present disclosure, but not all of them. Based on the embodiments of the present disclosure, all other embodiments that can be obtained by those of ordinary skill in the art without paying creative efforts belong to the scope of protection of the present disclosure.

In the description of the present disclosure, it should be understood that the orientations or positional relations indicated by the terms such as "center", "upper", "lower", "front", "rear", "left", "right", "vertical", "horizontal", "align", "overlap", "bottom", "inside", "outside", etc., are orientations or positional relations shown based on the accompanying drawings, and are used only for convenience of description of the present disclosure and for simplifying the same, which are not intended to indicate or imply that the device or element referred to must have a specific orientation, or be configured and operated in a particular orientation, and thus they are not to be construed as a limitation of the present disclosure.

The terms "first" and "second" are used for descriptive purposes only and are not to be understood as indicating or implying any relative importance or implicitly specifying the number of any technical features referred to. Therefore, the feature defined with "first" and "second" may explicitly or implicitly include one or more of the feature; in the description of the present disclosure, unless otherwise stated, the meaning of "plurality" is two or more.

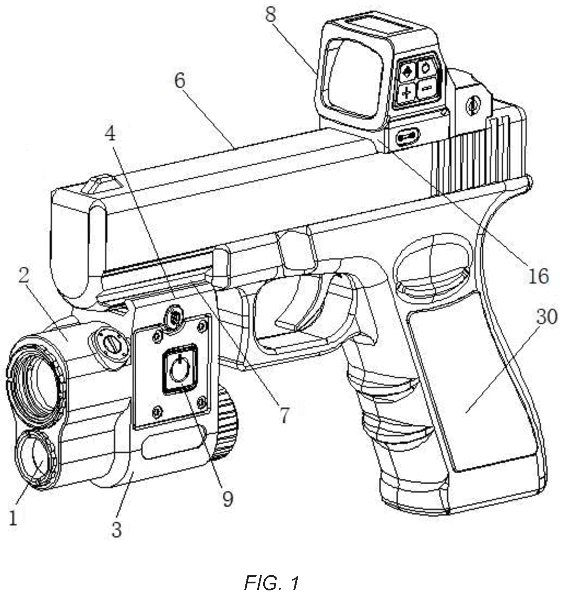

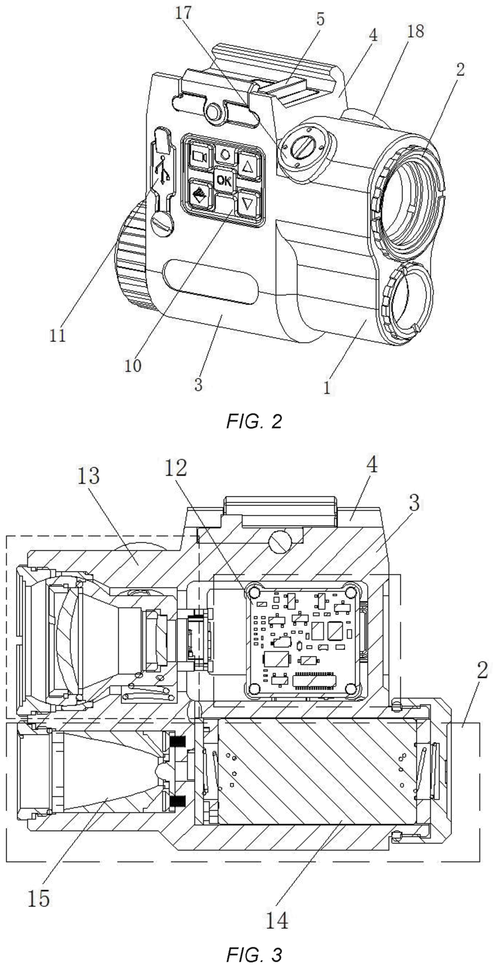

The existing fusion sights (i.e., inner red dot sighting devices with thermal imaging and low-light night vision sighting functions, in which the thermal imaging and low-light night vision sighting part is known as new parts, and the inner red dot sighting device is known as a traditional part) have a relative large volume, regardless of the fact that the new parts and the traditional part are integrated with a shared housing or these parts are split and connected through circuit interface, and when in use these parts are in an integral state, instead of being split that can be mounted on a firearm separately during use. Therefore, such existing fusion sights are not applicable on a small, compact pistol, and moreover, the two parts still need internal fixation with each other, results in inconveniences in disassembling and assembling the two parts. In order to overcome such a drawback, the present embodiment provides a pistol fusion sight shown in FIG. 1, which includes a split-type fusion sight (i.e., similar to the split-type fusion sight described in the Chinese utility model patent No. 202223132354.0) and an illumination module 1; where the eyepiece component of the split-type fusion sight (i.e. the reflective sighting member 8 in the embodiment) is clamped at the rear end of the top of the pistol slide 6, the sighting component of the split-type fusion sight (i.e. the camera component 2 in the embodiment) is disposed at the bottom of the front end of the pistol grip 30, as can be seen from FIG. 1, the camera component 2 and the illumination module 1 are disposed inside the connecting housing 3 in an upper-lower stacked configuration, that is, the camera component 2 and the illumination module 1 share a common shell for connecting and assembling the two modules together, thereby enabling convenient mounting and carrying. Where the illumination module as shown in FIG. 3 is substantially the same as the existing illumination module, which mainly consists of a battery compartment 14 and a light source component 15, the light source here may be an LED lamp or a laser diode.

In conjunction with Fig. 2, it can further be seen that a first engagement rail 4 is disposed on the top surface of the connecting casing 3, and a transverse projection 5 is disposed in a rail groove of the first engagement rail 4; where the first engagement rail 4 is configured to be engaged on an axial rail 7 disposed on the bottom face of the front end of the grip 30, and the transverse projection 5 is configured to be accommodated in a transverse groove disposed on the axial rail 7 to achieve an axial limiting of the camera component 2.

A second engagement rail 16 is disposed at the bottom of the reflective sighting member 8 of the split-type fusion sighting device shown in FIG. 1, to fix the reflective sighting member 8 on the top surface of the rear end of the slide 6.

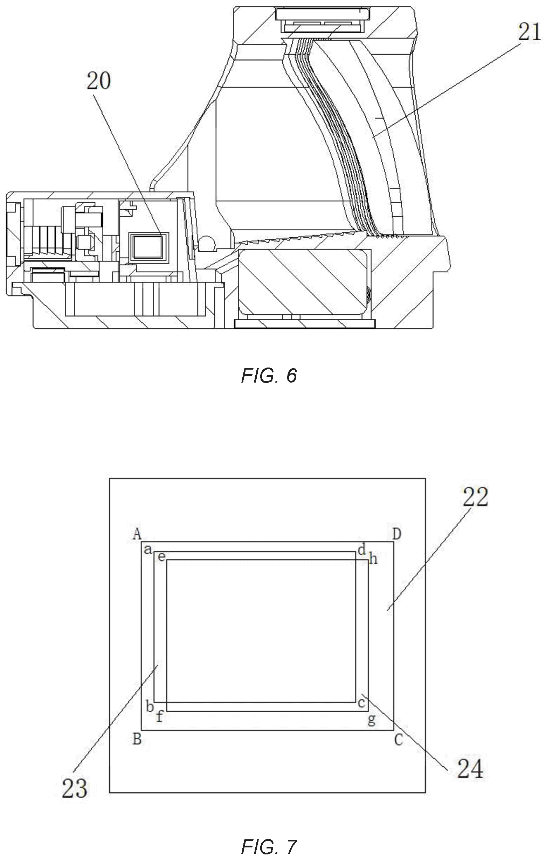

In order to transmit the target image to the user, in this embodiment a first wireless communication module is disposed inside an existing camera component 2, the first wireless communication module is connected with the image sensor digital core 12 (a front end of which is a thermal imaging or low-light night vision lens component 13) shown in FIG. 3. Similarly, a second wireless communication module is disposed in each reflective sighting members 8 and is connected with the display screen for transmitting image data from the image sensor digital core 12 to the display screen 20 shown in FIG. 6. The display screen 20 projects the image onto the reflective lens 21 of the traditional inner red dot sighting device and then the image is emitted out of a protective glass at the eyepiece end for users to view.

Since the sighting function is distributed in both the camera component 2 and the reflective sighting member 8, the camera component 2 achieves imaging of the target, the image information is wirelessly transmitted to the display screen 20 of the reflective sighting member 8, the image is projected onto the reflective lens 21 by the display screen 20 and fuses with an actual object image incident from the target in the front of the reflective sighting member 8.

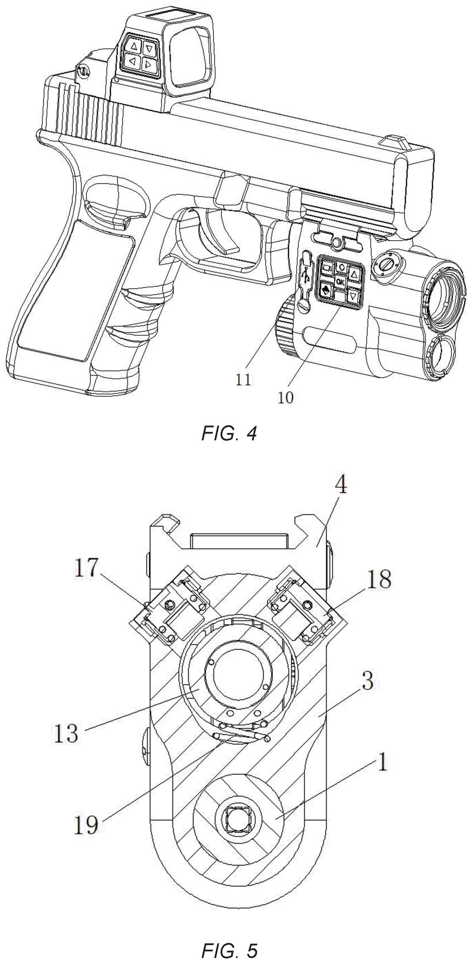

Since the camera component 2 and the reflective sighting member 8 for imaging are mounted, as two units, at upper and lower parts of a firearm, respectively, there is certain deviation in the axiality (up and down or side to side), which may result in that the image is not coaxial with the actual object image, and that misalignment occurs, which affects both observation and sighting. In order to overcome this drawback, the present embodiment solves the problem through the coordination of two methods: the one is to add a adjustment mechanism to the camera component 2 shown in Fig. 5, such that the camera optical axis may be fine-tuned at a certain pitch and horizontal angle; the other is to reserve a display area of the outer bezel of the screen within the reflective sighting member 8, as an adjustment range for displaying the fusion of the image with the target object image. The coordination of the two methods achieves that even if the assembly causes misalignment issues, the user can still realize image fusion by adjustment so as to achieve more accurate observation and sighting. A specific implementation of this embodiment is shown in FIG. 5, in which a first adjustment screw 17 and a second adjustment screw 18 are respectively disposed at both sides of the top of the front end of the connecting housing 3; and an adjustment spring 19 (a helical reset spring) is disposed between the bottom of the chamber within the connecting housing 3 (in which the camera component 2 is mounted) and the bottom of the thermal imaging or low-light night vision lens component 13 of the camera component 2, and is configured, in conjunction with the first adjustment screw 17 and the second adjustment screw 18, to achieve an adjustment of camera optical axis of the thermal imaging or low-light night vision lens component 13, such that a projected object image of the display screen 20 is fused with an actual object image. When the projected object image is fused with the actual object image, the process is performed with reference to the auxiliary display frame of the display screen shown in FIG. 6, specifically, a screen maximum display area frame 22, i.e., a rectangular frame ABCD, a screen display area adjustment frame 23, i.e., a rectangular frame abcd, and a screen actual display area frame 24, i.e., a rectangular frame efgh, are provided. In this way, the position of the projected object image can be adjusted with reference to the position of the projected object image so that it coincides with the actual object image. In forming a physical object, the screen maximum display area frame 22 (the rectangular frame ABCD) is the maximum display range of the display screen; the screen actual display area frame 24, i.e. the rectangular frame efgh is located in the middle of the screen maximum display area frame 22 (the rectangular frame ABCD) in a initial state of the display screen, and the screen display area adjustment frame 23 (the rectangular frame abcd) indicates the display position on the screen maximum display area frame 22 (the rectangular frame ABCD) after the display area is adjusted. Therefore, the projection of the actual object image onto the reflective lens can be used as a reference for adjusting the position of the projected object image so that the projected image of the display projected onto the reflective lens coincides with the actual object image, that is, ultimately only one object image will be seen on the screen and it is displayed on the screen actual display area frame 24, i.e. display block of the rectangular frame efgh. The actual display area frame 24 of the display screen, i.e., the rectangular frame efgh, may be adjusted up, down, left and right inside the screen maximum display frame 22 (the rectangular frame ABCD).

As seen in FIGs. 1 and 4, a power switch 9 is disposed at one side of the connecting housing 3, and a control push-button 10 and a charging interface 11 are disposed at the other side. Likewise, the reflective sighting member 8 has dedicated power switch and control push-button.

It is not difficult to find that, in the embodiment, the existing target collecting member, i.e. eyepiece component (also known as sighting component) composed of lens component and core component of the sight (fusion sighting device for short) with thermal imaging and low-light night vision sighting function and incorporating traditional LED graphic chip, spectral display component (mainly composed of display screen and spectroscope, also known as reflective sighting member) are prepared separately, and transmission of image data is achieved by an additional wireless communication module, while engagement rails are disposed on the outer sides of their housings respectively, these engagement rails are respectively connected with rails disposed on the pistol, so that the existing fusion sighting device may be conveniently applied to the pistol, which is not only convenient to use, but also flexible and easy to maintain and replace the same.

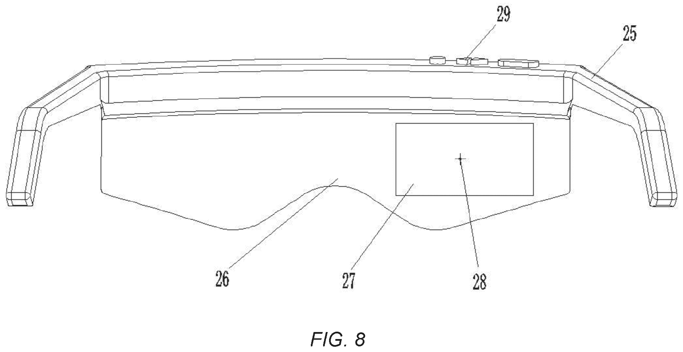

In the system, i.e. the pistol fusion sight, the image of the camera component may be wirelessly transmitted to the AR glasses, and a user wearing the AR glasses can observe the display image of the camera component for sighting while observing the actual environment. Specifically, the pistol fusion sight further includes AR glasses as shown in FIG. 8, a third wireless communication module connected with AR display lenses 26 is disposed inside a mounting frame 25 of the AR glasses and is configured to transmit image data from an image sensor digital core to the AR display lenses 26, so as to display the same in a display area frame 27 of the AR display lenses 26; a sighting point 28 is provided in the display area frame 27. Through transmitting the information captured by the camera component 2 in the pistol fusion sight to the AR glasses, it is possible to effectively compensate for partial loss of visual field due to reduction in the range of the field of view transmitted by the camera component 2 to the reflective sighting member 8. After the camera component 2 wirelessly transmitting the image signal to the AR glasses, the display range of the AR glasses is aligned with the angle of field of view of the camera component 2, which is larger than the angle of field of view of the reflective sighting member 8, so that a larger range can be observed, which is conducive to the discovery and identification of the target. Meanwhile, a sighting cursor (i.e., a sighting point 28 shown in FIG. 8) is added to the display image of the AR glasses, and the sighting cursor can be moved in position in the display image of the AR glasses. Specifically, three push-buttons 29 disposed at the upper right corner of the mounting frame 25 of the AR glasses are used for adjusting the position of the sighting point 28 in the display area frame 27. The position of the sighting cursor in the image captured by the camera component 2 disposed on the pistol can be calibrated with the sighting point of the pistol, to achieve sighting by the position relation between the image transmitted by the camera component and the sighting cursor, independent of the sighting baseline of the pistol.

Finally, it should be noted that the image sensor digital core 12 involved in the embodiment may be a fusion core of any one or more of the contemporary mainstream thermal imaging cores, night vision core and visible light core. At present, a common fusion core includes a non-refrigeration type long-wave infrared (LWIR) OEM thermal imager module Boson^{®} type: Boson 320, 4° (HFOV) 55mm, or a Miniature Long Wave Infrared Camera Module Lepton^{®} type: Lepton 2.5, 80×60, 50°, with radiometric functions, and with shutter.

## Claims

1. A pistol fusion sight comprising a split-type fusion sight, a reflective sighting member (8) of the split-type fusion sight is clamped at a rear end of the top of a pistol slide (6), a camera component (2) of the split-type fusion sight is disposed at a bottom of a front end of a pistol grip (30), **characterized in that** the pistol fusion sight further comprises a illumination module (1);
the camera component (2) and the illumination module (1) are disposed inside the connecting housing (3) in an upper-lower stacked configuration;
a first engagement rail (4) is disposed on a top surface of the connecting housing (3);
the first engagement rail (4) is configured to be engaged on an axial rail (7) disposed on a bottom surface of the front end of the grip (30);
a second engagement rail is disposed at the bottom of the reflective sighting member (8), to fix the reflective sighting member (8) on the top surface of the rear end of the slide (6);
a first wireless communication module connected with an image sensor digital core is disposed inside the camera component (2);
a second wireless communication module connected with a display screen is disposed inside each reflective sighting member (8) and is configured to transmit image data from the image sensor digital core to the display screen.

2. The pistol fusion sight according to claim 1, **characterized in that** a transverse projection (5) is disposed inside a rail groove of the first engagement rail (4); the transverse projection (5) is configured to be received in a transverse groove disposed on the axial rail (7).

3. The pistol fusion sight according to claim 1 or 2, **characterized in that** a first adjustment screw (17) and a second adjustment screw (18) are respectively disposed at both sides of the top of the front end of the connecting housing (3); an adjustment spring (19) is disposed between a bottom of a chamber of the connecting housing (3), in which the camera component (2) is mounted, and a bottom of a thermal imaging or low-light night vision lens component (13) of the camera component (2), the adjustment spring is configured, in conjunction with the first adjustment screw (17) and the second adjustment screw (18), to achieve an adjustment of camera optical axis of the thermal imaging or low-light night vision lens component (13), such that a projected object image of the display screen is fused with an actual object image.

4. The pistol fusion sight according to claim 3, **characterized in that** a screen maximum display area frame (22), a screen display area adjustment frame (23) and a screen actual display area frame (24) are disposed on the display screen (20);
the screen display area adjustment frame (23) and the screen actual display area frame (24) are located inside a rectangular frame _{ABCD} of the screen maximum display area frame (22);
the screen display area adjustment frame (23) is a rectangular frame _{abcd} which is offset to the outer side of the screen maximum display area frame (22);
the screen actual display area frame (24) is a rectangle _{eggh} which is coincident in the middle point of diagonal lines with the screen maximum display area frame (22).

5. The pistol fusion sight according to claim 1 or 2, **characterized in that** one side of the connecting housing (3) is provided with a power switch (9), and the other side is provided with a control push-button (10) and a charging interface (11).

6. The pistol fusion sight according to claim 1 or 2, **characterized in that** the image sensor digital core is a fusion core which is any one or more of a thermal imaging core, a night vision core and a visible light core.

7. The pistol fusion sight according to claim 1 or 2, **characterized in that** it further comprises AR glasses, wherein a third wireless communication module connected with AR display lenses (26) is disposed inside a mounting frame (25) of the AR glasses and is configured to transmit image data from the image sensor digital core to the AR display lenses (26) so as to display in a display area frame (27) of the AR display lenses (26); a sighting point (28) is disposed inside the display area frame (27).
